# EUROPÄISCHE PATENTSCHRIFT

(11) **EP 2 878 475 B1**
(45) Veröffentlichungstag und Bekanntmachung des Hinweises auf die Patenterteilung: **06.11.2019**
(21) Anmeldenummer: 14185124.6
(22) Anmeldetag: 17.09.2014
(51) Int. Cl.: B60K 15/03, B60K 15/07

(54) **Nutzfahrzeuganhänger, insbesondere Sattelauflieger, und Nutzfahrzeuggespann**
Commercial vehicle trailer, in particular semi-trailer, and commercial vehicle trailer assembly
Remorque de véhicule utilitaire, en particulier semi-remorque, et attelage de véhicule utilitaire

(30) Priorität: 16.10.2013 DE 102013111399
(43) Veröffentlichungstag der Anmeldung: 03.06.2015
(73) Patentinhaber: Kögel Trailer GmbH, 89349 Burtenbach (DE)
(72) Erfinder: Bayer, Bernhard, 83550 Emmering (DE)
(74) Vertreter: Kilchert, Jochen

(56) Entgegenhaltungen:
- EP-A1- 1 717 121
- EP-A2- 1 760 390
- DE-A1- 10 216 564
- DE-A1-102011 056 921
- DE-U1-202012 103 321
- US-A1- 2002 171 236

## Beschreibung

Die Erfindung betrifft einen Nutzfahrzeuganhänger, insbesondere Sattelauflieger, sowie ein Nutzfahrzeuggespann mit einem derartigen Nutzfahrzeuganhänger. Ein Nutzfahrzeuganhänger der eingangs genannten Art ist beispielsweise aus der auf die Anmelderin zurückgehenden DE 10 2011 056 921 A1 bekannt.

Der bekannte Nutzfahrzeuganhänger umfasst einen Gastank zum Speichern von Erdgas oder Flüssiggas, der durch eine Gasleitung mit einem Zugfahrzeug verbindbar ist. Der Antriebsmotor des Zugfahrzeugs kann durch das im Gastank des Nutzfahrzeuganhängers gespeicherte Gas betrieben werden, um die Reichweite von gasbetriebenen Nutzfahrzeugen zu erhöhen. Zur Gasversorgung des Zugfahrzeugs erstreckt sich die Gasleitung zumindest abschnittsweise entlang des Nutzfahrzeuganhängers.

Die Gastanks weisen in der Praxis Gasventile auf, die durch Öffnen und Schließen die Gaszufuhr an das Zugfahrzeug regeln können. Zur Steuerung der Gasventile ist eine Stromversorgung erforderlich, die bislang durch eigene Stromversorgungsleitungen erfolgt, die sich entlang des Nutzfahrzeuganhängers erstrecken und über ein Anschlusspaneel an der Front des Nutzfahrzeuganhängers mit einer Stromquelle bzw. Spannungsquelle des Zugfahrzeugs verbindbar sind. Es hat sich gezeigt, dass die zusätzliche Kabelführung entlang des Nutzfahrzeuganhängers aufwändig ist, den Montageaufwand erhöht und das Nachrüsten von bestehenden Nutzfahrzeuganhängern mit einem Gastank erschwert.

Ein weiterer Nutzfahrzeuganhänger ist aus der DE 20 2012 103 321 U1 bekannt.

Die Aufgabe der Erfindung besteht darin, den bekannten Nutzfahrzeuganhänger derart weiterzuentwickeln, dass der Montageaufwand reduziert und die Nachrüstbarkeit verbessert wird. Ferner ist es Aufgabe der Erfindung, die Betriebssicherheit und Versorgungssicherheit einer Gastankanlage an einem Nutzfahrzeuganhänger zu erhöhen. Schließlich besteht die Aufgabe der Erfindung darin, ein Nutzfahrzeuggespann mit einem derartigen Nutzfahrzeuganhänger anzugeben.

Diese Aufgabe wird im Hinblick auf den Nutzfahrzeuganhänger durch die Gegenstände der Patentansprüche 1 und 11 und im Hinblick auf das Nutzfahrzeuggespann durch den Gegenstand des Patentanspruchs 14 gelöst.

So beruht die Erfindung auf dem Gedanken, einen Nutzfahrzeuganhänger, insbesondere Sattelauflieger, mit einer Bremsanlage und mit wenigstens einem Gastank anzugeben, der durch eine Gasleitung mit einem Antriebsmotor eines Zugfahrzeugs fluidverbindbar ist. Die Gasleitung erstreckt sich zumindest abschnittsweise entlang des Nutzfahrzeuganhängers. Erfindungsgemäß ist die Gasleitung mit einem elektrisch betätigbaren Gasventil des Gastanks verbunden, das mit einem Stromversorgungsausgang eines Bremssteuermoduls der Bremsanlage elektrisch gekoppelt ist.

Üblicherweise sind an einem Bremssteuermodul diverse Schnittstellen vorgesehen, wobei meist zumindest ein Stromversorgungsausgang nicht belegt ist. Dieser kann genutzt werden, um die Stromversorgung für die Gasventile der Gastanks bereitzustellen. Das Bremssteuermodul ist vorzugsweise Bestandteil der Bremsanlage des Nutzfahrzeuganhängers, insbesondere eines elektronischen Bremssystems (EBS). Daher ist das Bremssteuermodul bereits am Nutzfahrzeuganhänger angeordnet. Durch die elektrische Verbindung der Gasventile mit dem Stromversorgungsausgang des Bremssteuermoduls wird die Verlegung einer Stromversorgungsleitung entlang des Nutzfahrzeuganhängers bis zu einer Verbindungsstelle zur Anbindung an das stromversorgende Zugfahrzeug vermieden. Dies spart zusätzlichen Montageaufwand, reduziert Material- und Bauteilkosten und erleichtert die Nachrüstung bestehender Nutzfahrzeuganhänger.

Um die Länge der elektrischen Leitungen zwischen dem Bremssteuermodul und den Gasventilen gering zu halten, hat es sich als vorteilhaft erwiesen, das Bremssteuermodul an einem Fahrzeugrahmen des Nutzfahrzeuganhängers anzuordnen.

Der Gastank ist vorzugsweise unmittelbar unterhalb oder zwischen Rahmenteilen des Fahrzeugrahmens angeordnet, so dass durch die Anordnung des Bremssteuermoduls am Fahrzeugrahmen kurze Leitungslängen und somit Materialeinsparungen ermöglicht sind. Konkret kann der Gastank unterhalb des Bremssteuermoduls angeordnet sein.

In einer bevorzugten Ausführungsform des erfindungsgemäßen Nutzfahrzeuganhängers ist ein Tankmodul mit mehreren Gastanks vorgesehen. Mit anderen Worten kann der Nutzfahrzeuganhänger ein Tankmodul aufweisen, das mehrere Gastanks umfasst. Das Tankmodul ist vorzugsweise am Fahrzeugrahmen des Nutzfahrzeuganhängers befestigt. Jeder Gastank des Tankmoduls weist vorzugsweise ein eigenes Gasventil auf. Die Verwendung eines Tankmoduls mit mehreren Gastanks dient weiter zur Erleichterung bei der Montage und zur Vereinfachung bei der Nachrüstung eines bestehenden Nutzfahrzeuganhängers. Durch die Verwendung des Stromversorgungsausganges des Bremssteuermoduls in Verbindung mit einem Tankmodul kann das Tankmodul einfach und schnell zu Wartungszwecken vom Nutzfahrzeuganhänger entfernt werden, wobei die elektrischen Verbindungen einfach zu trennen sind.

Vorzugsweise ist zwischen dem Stromversorgungsausgang und dem Gasventil bzw. den Gasventilen ein Schaltrelais angeordnet. Das Schaltrelais bietet eine einfache und wartungsarme Möglichkeit, das Gasventil zu betätigen.

Es sich als zweckmäßig erwiesen, mehrere Schaltrelais mit demselben Stromversorgungsausgang des Bremssteuermoduls in Reihenschaltung zu verbinden. Die Schaltrelais können insbesondere jeweils einen Betriebsstromeingang, einen Betriebsstromausgang und einen Schaltstromausgang aufweisen. Der Betriebsstromeingang ist vorzugsweise elektrisch mit dem Stromversorgungsausgang des Bremssteuermoduls oder einem Betriebsstromausgang eines in Reihe vorgeschalteten Schaltrelais verbunden. Durch die Reihenschaltung der Schaltrelais hinsichtlich des Betriebsstroms für die Gasventile werden zusätzliche Stromversorgungsleitungen eingespart.

Der Schaltstromausgang kann mit einem Gasventil elektrisch verbunden sein. Die Schaltrelais werden durch einen Steuersignal aktiviert, und stellen im aktivierten Zustand eine Stromverbindung zwischen dem Stromversorgungsausgang des Bremssteuermoduls und dem Schaltstromausgang her, so dass das Gasventil mit einem Betriebsstrom beaufschlagt wird.

Bei einer bevorzugten Ausführungsform des erfindungsgemäßen Nutzfahrzeuganhängers weist das Gasventilsteuermodul einen Stromversorgungseingang aufweist. Der Stromversorgungseingang kann mit dem Stromversorgungsausgang des Bremssteuermoduls elektrisch verbunden sein. Das Gasventilsteuermodul kann ferner einen Schaltstromausgang zur Verbindung mit dem Gasventil aufweisen, so dass das Öffnen und Schließen des Gasventils durch das Gasventilsteuermodul steuerbar ist. Das Gasventilsteuermodul umfasst vorzugsweise eine elektronische Steuerschaltung. Durch die Verwendung eines Gasventilsteuermoduls können weitere Schnittstellen bereitgestellt werden, beispielsweise zur Anbindung von Sensoren zur Überwachung der Gastanks und/oder der Gasleitung.

Insbesondere kann das Gasventilsteuermodul einen Sensoreingang aufweisen, der mit wenigstens einem Sensor, insbesondere einem Drucksensor und/oder Volumenstromsensor, signalverbunden oder signalverbindbar ist, wobei der Sensor am Gastank oder in der Gasleitung angeordnet ist. Auf diese Weise kann die Gasversorgung der Zugmaschine aus den Gastanks überwacht werden.

Bei dem erfindungsgemäßen Nutzfahrzeuganhänger kann bevorzugt vorgesehen sein, dass das Bremssteuermodul und/oder das Schaltrelais und/oder das Gasventilsteuermodul einen Steuersignaleingang, insbesondere eine CAN-Bus-Schnittstelle, aufweist. Der Steuersignaleingang ist vorzugsweise mit einer Motorsteuerung des Zugfahrzeugs signalverbunden oder signalverbindbar, so dass das Öffnen und Schließen des Gasventils in Abhängigkeit eines Betriebszustands des Antriebsmotors des Zugfahrzeugs steuerbar ist. Über den Steuersignaleingang kann also der Betriebszustand des Gasventils anhand von Motordaten des Antriebsmotors des Zugfahrzeugs gesteuert werden. Dies stellt eine sichere und flexible Steuerung der Gasventile dar. Ferner ermöglicht die Verwendung eines elektronischen Steuermoduls, beispielsweise des Bremssteuermoduls oder des Gasventilsteuermoduls, eine bidirektionale Kommunikation, so dass beispielsweise die Schaltstellung des Gasventils über eine Anzeige im Zugfahrzeug dargestellt werden kann. Jedenfalls ist eine Rückkopplung des Schaltzustandes an die Motorsteuerung des Zugfahrzeugs möglich.

Das Gasventilsteuermodul ist bei dem erfindungsgemäßen Nutzfahrzeuganhänger vorzugsweise am Tankmodul angeordnet. Das Tankmodul bildet somit eine kompakte Einheit, wobei alle wesentlichen Komponenten der Gasanlage im Tankmodul vereint sind. Dies erleichtert die Nachrüstung, Wartung und Montage des Tankmoduls am Nutzfahrzeuganhänger.

Der Stromversorgungsausgang kann als Dauerplusausgang ausgebildet sein. Vorzugsweise weist der Stromversorgungsausgang eine elektrische Spannung von 12 V oder 24 V auf. Ein derartiger Stromversorgungsausgang kann direkt zur Versorgung der Gasventile genutzt werden, insbesondere ohne zusätzliche Spannungswandler oder dergleichen Bauteile.

Gemäß einem nebengeordneten Aspekt beruht die Erfindung auf dem Gedanken, einen Nutzfahrzeuganhänger, insbesondere Sattelauflieger, mit wenigstens zwei Gastanks anzugeben, die durch eine Gasleitung mit einem Antriebsmotor eines Zugfahrzeugs fluidverbindbar sind und jeweils ein elektrisch betätigbares Gasventil aufweisen. Die Gasleitung erstreckt sich vorzugsweise entlang des Nutzfahrzeuganhängers und ist mit jedem Gasventil verbunden. Erfindungsgemäß sind wenigstens zwei elektrische Sicherungen vorgesehen, wobei jedes Gasventil über jeweils eine eigene elektrische Sicherung abgesichert ist.

Die einzelne Absicherung der Gasventile hat den Vorteil, dass selbst bei einer Fehlfunktion eines Gasventils die Gasversorgung des Zugfahrzeugs sichergestellt ist. Dies erhöht die Versorgungssicherheit, d.h. das Zugfahrzeug wird auch Fehlfunktion eines einzelnen Ventils weiterhin mit Gas versorgt. Eine Unterbrechung der Treibstoffzufuhr wird vermieden. Außerdem wird die Betriebssicherheit der Gasanlage erhöht, da einzelne Gasventile bei Fehlfunktionen einfach abgeschaltet bzw. die Stromversorgung dazu unterbrochen werden kann.

Bei einer bevorzugten Variante des Nutzfahrzeuganhängers sind die Sicherungen der Gasventile in einem Anschlusskasten einer Stirnwand des Nutzfahrzeuganhängers angeordnet. Dies erleichtert den Zugriff auf die Sicherungen und erhöht die Wartungsfreundlichkeit. Alternativ können die Sicherungen der Gasventile an einem Tankmodul angeordnet sein, das die Gastanks umfasst. So bildet das Tankmodul eine kompakte Einheit und ist einfach montierbar, da keine zusätzlichen Leitungen zum Anschlusskasten geführt werden.

Ein weiterer nebengeordneter Aspekt der Erfindung betrifft ein Nutzfahrzeuggespann mit einem Zugfahrzeug und einem Nutzfahrzeuganhänger gemäß der vorangehenden Beschreibung. Bei dem erfindungsgemäßen Nutzfahrzeuggespann ist der Gastank des Nutzfahrzeuganhängers vorzugsweise mit dem Antriebsmotor des Zugfahrzeugs fluidverbunden, so dass im Gastank gelagertes Gas, insbesondere Erdgas oder Flüssiggas, dem Zugfahrzeug als Treibstoff kontinuierlich zugeführt wird.

Das erfindungsgemäße Nutzfahrzeuggespann ermöglicht einen emissionsarmen Betrieb von Zugfahrzeugen durch die Verwendung von Flüssiggas oder Erdgas, wobei durch die zusätzliche Ausrüstung des Nutzfahrzeuganhängers mit Gastanks die Reichweite des gesamten Nutzfahrzeuggespanns deutlich erhöht wird. Dies macht derartige Nutzfahrzeuggespanne auch für Ferntransporte attraktiv.

Die Erfindung wird im Folgenden anhand von Ausführungsbeispielen unter Bezugnahme auf die beigefügten, schematischen Zeichnungen näher erläutert. Darin zeigen:
- Fig. 1: Eine Schaltungsanordnung für einen erfindungsgemäßen Nutzfahrzeuganhänger nach einem bevorzugten Ausführungsbeispiel mit Schaltrelais, die mit einem Bremssteuermodul signalverbunden sind;
- Fig. 2: Eine Schaltanordnung eines erfindungsgemäßen Nutzfahrzeuganhängers nach einem weiteren bevorzugten Ausführungsbeispiel, wobei die Schaltrelais mit einer Motorsteuerung des Zugfahrzeugs signalverbunden sind;
- Fig. 3: Eine Schaltanordnung eines erfindungsgemäßen Nutzfahrzeuganhängers nach einem weiteren bevorzugten Ausführungsbeispiel, wobei die Betätigung der Gasventile durch ein Gasventilsteuermodul erfolgt, das mit der Motorsteuerung des Zugfahrzeugs signalverbunden ist;
- Fig. 4: Eine Schaltanordnung eines erfindungsgemäßen Nutzfahrzeuganhängers nach einem weiteren bevorzugten Ausführungsbeispiel, wobei das Gasventil das Steuermodul mit einem Bremssteuermodul signalverbunden ist.

Die nachfolgend näher erläuterten Figuren zeigen jeweils einen Nutzfahrzeuganhänger 10, insbesondere einen Sattelauflieger. Der Nutzfahrzeuganhänger 10 ist mit einem Zugfahrzeug 20 verbindbar, beispielsweise durch eine Sattelkupplung. Das Zugfahrzeug 20 weist eine Motorsteuerung 21 auf, die Strom- und Signalanschlüsse umfasst.

Der Nutzfahrzeuganhänger 10 weist eine Bremsanlage auf, die ein Bremssteuermodul 18 umfasst. Das Bremssteuermodul 18 ist vorzugsweise fest mit dem Nutzfahrzeuganhänger 10, insbesondere einem Fahrzeugrahmen des Nutzfahrzeuganhängers 10, fest verbunden. Insbesondere handelt es sich um ein elektronisches Bremssteuermodul 18.

Ferner umfasst der Nutzfahrzeuganhänger 10 wenigstens einen Gastank 12, der durch eine nicht dargestellte Gasleitung mit dem Antriebsmotor des Zugfahrzeugs 20 fluidverbindbar ist. Der Gastank 12 dient so als Treibstofftank für den Antriebsmotor des Zugfahrzeugs 20, wodurch bei Verwendung von Erdgas oder Flüssiggas als Treibstoff für das Zugfahrzeug eine erhöhte Reichweite bereitgestellt wird. Die Gasleitung erstreckt sich vorzugsweise entlang des Nutzfahrzeuganhängers 10 bis zu einem Anschlusskasten 23 an der Stirnwand des Nutzfahrzeuganhängers 10. Im Anschlusskasten 23 sind vorzugsweise Gasanschlüsse vorgesehen, so dass eine trennbare Gasverbindung zwischen dem Zugfahrzeug 20 und dem Nutzfahrzeuganhänger 10 bereitgestellt werden kann.

Für alle Ausführungsbeispiele gilt, dass die Gasanlage des Nutzfahrzeuganhängers 10 vorzugsweise ein Tankmodul 11 aufweist, das mehrere Gastanks 12 trägt. Konkret kann das Tankmodul 11 zwei Querbalken 14 umfassen, die durch Befestigungsflansche 15 mit den Fahrzeugrahmen des Nutzfahrzeuganhängers 10 verbindbar sind. Insbesondere kann das Tankmodul 11 zwischen tragenden Längsträgern des Fahrzeugrahmens angeordnet werden. Die Gastanks 12 erstrecken sich somit zwischen den Längsträgern des Fahrzeugrahmens, vorzugsweise parallel zur Längsrichtung bzw. Fahrtrichtung des Nutzfahrzeuganhängers 10. Die Gastanks 12 weisen jeweils ein Gasventil 13 auf, das elektrisch betätigbar ist. Die Gasventile 13 sind jeweils mit der Gasleitung zur Versorgung des Zugfahrzeugs 20 fluidverbunden.

Die Betätigung der Gasventile 13 erfolgt über einen Schaltstrom, der einem Stromversorgungsausgang 35 des Bremssteuermoduls 18 entnommen wird. Die nachfolgend näher beschriebenen Ausführungsbeispiele zeigen unterschiedliche Varianten für die Verschaltung einzelner Komponenten zur Betätigung der Gasventile 13. Dabei sind in den Figuren stromversorgungsrelevante Leitungen mit durchgezogenen Linien und signalübermittelnde Leitungen mit gestrichelten Linien dargestellt.

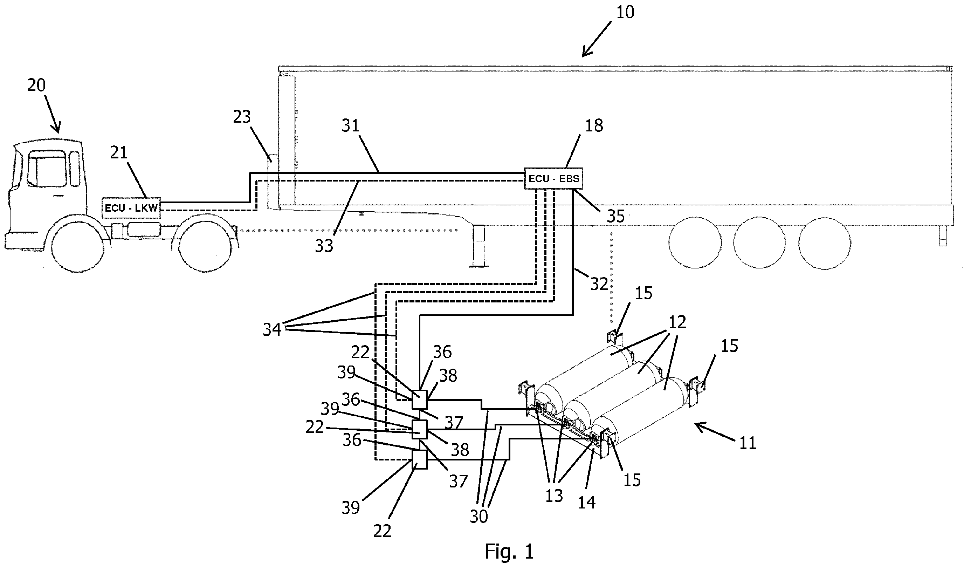

Fig. 1 zeigt ein Ausführungsbeispiel des erfindungsgemäßen Nutzfahrzeuganhängers 10, bei dem jedem Gasventil 13 jeweils ein Schaltrelais 22 zugeordnet ist. Jedes Schaltrelais 22 weist unterschiedliche Anschlüsse auf. Konkret umfasst jedes Schaltrelais 22 einen Betriebsstromeingang 36 und einen Betriebsstromausgang 37. Der Betriebsstromeingang 36 ist mit Stromversorgungsausgang 35 des Bremssteuermoduls 18 oder mit dem Betriebsstromausgang 37 eines vorgeschalteten Schaltrelais 22 elektrisch verbunden. Die Schaltrelais 22 sind also in einer Reihenschaltung bzw. Serienschaltung mit dem Stromversorgungsausgang 35 des Bremssteuermoduls 18 elektrisch gekoppelt. Dazu ist eine Stromverbindungsleitung 32 vorgesehen, die den Stromversorgungsaugang 35 des Bremssteuermoduls 18 mit dem Betriebsstromeingang 36 eines ersten Schaltrelais 22 elektrisch koppelt. Zwischen dem Betriebsstromausgang 37 des ersten Schaltrelais 22 und dem Betriebsstromeingang eines zweiten Schaltrelais 22 ist ebenfalls eine Verbindungsleitung angeordnet. Der Betriebsstrom, der über den Stromversorgungsaugang 35 des Bremssteuermoduls 18 an das erste Schaltrelais 22 geleitet wird, wird somit weiter an das zweite und jedes weitere folgende Schaltrelais 22 übergeleitet.

Die Schaltrelais 22 weisen jeweils einen Schaltstromausgang 38 auf. Der Schaltstromausgang 38 ist jeweils mit einer Schaltstromleitung 30 mit einem Gasventil 13 gekoppelt. Schließlich umfasst jedes Schaltrelais 22 einen Steuersignaleingang 39, der bei dem Ausführungsbeispiel gemäß Fig. 1 über jeweils eine Signalverbindungsleitung 34 mit dem Bremssteuermodul 38 signalverbunden ist. Über den Steuersignaleingang 39 erhält das Schaltrelais 22 ein Schaltsignal, so dass eine elektrische Verbindung zwischen dem Betriebsstromeingang 36 und dem Schaltstromausgang 38 geschlossen oder geöffnet wird. So steuert das Schaltrelais 22 die elektrische Verbindung zwischen dem Stromversorgungsaugang 35 des Bremssteuermoduls 18 und dem Gasventil 13.

Das Bremssteuermodul 18 ist über eine Stromversorgungsleitung 31 mit der Motorsteuerung 21 des Zugfahrzeugs 20 verbunden. Ferner ist eine Steuersignalleitung 33 vorgesehen, die das Bremssteuermodul 18 mit der Motorsteuerung 21 des Zugfahrzeugs 20 signalverbindet. Vorzugsweise sind die Stromversorgungsleitung 31 und die Steuersignalleitung 33 mit einer lösbaren Anschlussverbindung versehen, die im Anschlusskasten 23 angeordnet ist. Mit anderen Worten können im Anschlusskasten ein elektrischer Anschluss und ein Daten- bzw. Signalanschluss vorgesehen sein, um die Stromversorgungsleitung 31 und die Steuersignalleitung 33 trennbar mit der Motorsteuerung 21 zu koppeln.

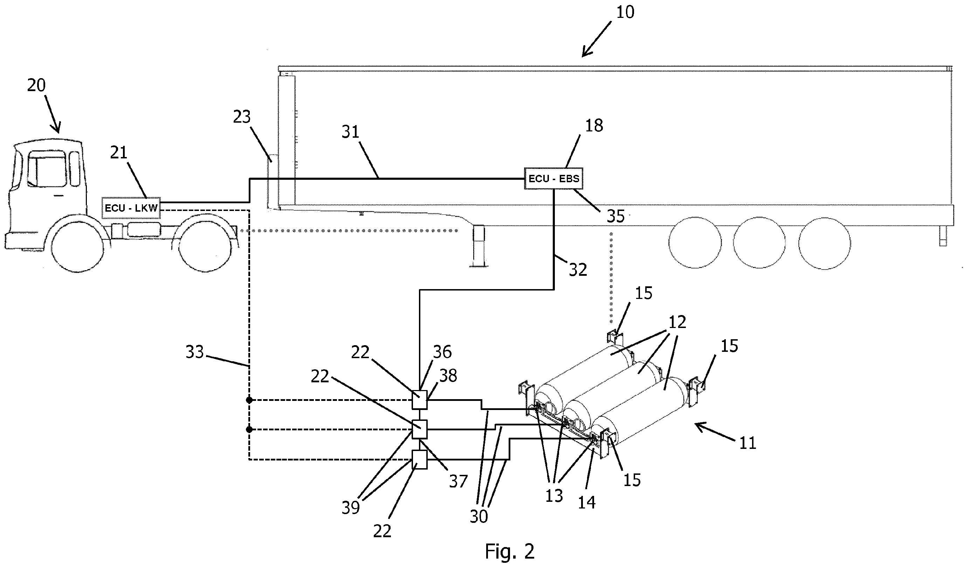

Das Ausführungsbeispiel gemäß Fig. 2 entspricht in weiten Teilen dem Ausführungsbeispiel gemäß Fig. 1 mit dem Unterschied, dass die einzelnen Schaltrelais 22 durch eine Steuersignalleitung 33 direkt mit der Motorsteuerung 21 des Zugfahrzeugs 20 signalverbunden sind. Lediglich die Betriebsstromversorgung der Schaltrelais 22 erfolgt über das Bremssteuermodul 18. Die Steuersignalleitung 33 ist bei dem Ausführungsbeispiel gemäß Fig. 2 vorzugsweise ebenfalls über den Anschlusskasten 23 geführt, so dass eine lösbare Verbindung zur Motorsteuerung 21 des Zugfahrzeugs 20 besteht.

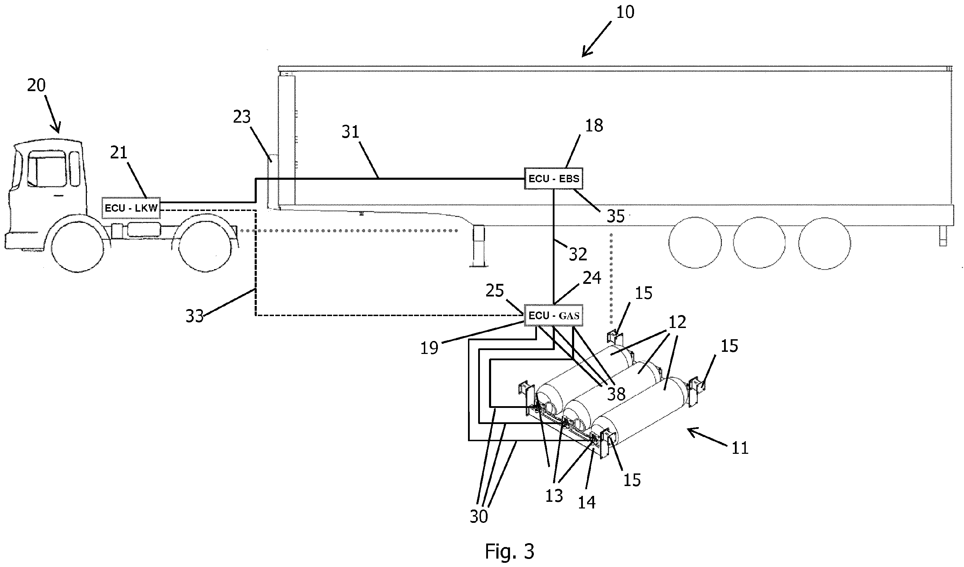

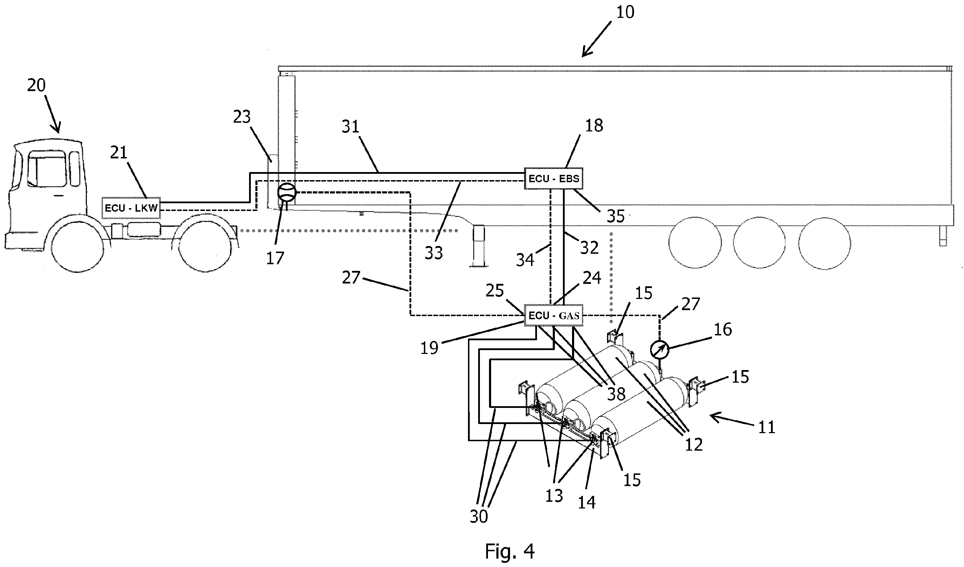

In den Fig. 3 und 4 ist eine alternative Variante des Nutzfahrzeuganhängers 10 dargestellt, wobei zur Betätigung der Gasventile 13 am Tankmodul 11 anstatt der Schaltrelais 22 ein Gasventilsteuermodul 19 vorgesehen ist. Das Gasventilsteuermodul 19 ist vorzugsweise als elektronisches Gasventilsteuermodul 19 ausgebildet. Insbesondere umfasst das Gasventilsteuermodul 19 einen Stromversorgungseingang 24 der über eine Stromverbindungsleitung 32 mit dem Stromversorgungsausgang 35 des Bremssteuermoduls 18 elektrisch verbunden ist. Ferner weist das Gasventilsteuermodul 19 eine Datenschnittstelle 28 auf, die durch die Steuersignalleitung 33 mit der Motorsteuerung 21 des Zugfahrzeugs 20 verbunden ist. Die Steuersignalleitung 33 ist vorzugsweise trennbar und über den Anschlusskasten 23 geführt. Insbesondere ist die Steuersignalleitung 33 im Anschlusskasten 23 trennbar, so dass das Zugfahrzeug 20 vollständig vom Nutzfahrzeuganhänger 10 gelöst werden kann. Die Datenschnittstelle 25 ermöglicht vorzugsweise eine bidirektionale Kommunikation zwischen der Motorsteuerung 21 und dem Gasventilsteuermodul 19. Das Gasventilsteuermodul 19 umfasst ferner mehrere Schaltstromausgänge 38, die jeweils über eine Schaltstromleitung 30 mit einem Gasventil 13 verbunden sind.

Das Ausführungsbeispiel gemäß Fig. 4 unterscheidet sich vom Ausführungsbeispiel gemäß Fig. 3 dadurch, dass das Gasventilsteuermodul 19 mit dem Bremssteuermodul 18 signalverbunden ist. Insbesondere ist zwischen den Gasventilsteuermodul 19 und dem Bremssteuermodul 18 eine Signalverbindungsleitung 34 vorgesehen. Die Signalverbindungsleitung 34 ermöglicht eine bidirektionale Datenkommunikation zwischen dem Bremssteuermodul 18 und dem Gasventilsteuermodul 19. Das Bremssteuermodul 18 ist zusätzlich über eine Steuersignalleitung 33 mit der Motorsteuerung 21 des Zugfahrzeugs verbunden, so dass über das Bremssteuermodul 18 Daten zwischen dem Gasventilsteuermodul 19 und der Motorsteuerung 21 ausgetauscht werden können.

Ferner umfasst das Gasventilsteuermodul 19 gemäß dem Ausführungsbeispiel nach Fig. 4 mehrere Sensoreingänge, an die jeweils ein Sensor 17, 18 über eine Sensorleitung 27 angeschlossen ist. Grundsätzlich können unterschiedliche Sensoren mit dem Gasventilsteuermodul 19 signalverbunden sein. Vorzugsweise ist wenigstens ein Drucksensor 16 und/oder ein Volumenstromsensor 17 vorgesehen. Bei dem Ausführungsbeispiel gemäß Fig. 4 ist ein Drucksensor 16 am Tankmodul 11 angeordnet, insbesondere unmittelbar mit wenigstens einem Gastank 12 verbunden. Auf diese Weise kann der Druck innerhalb der Gastanks 12 durch das Gasventilsteuermodul 19 überwacht werden. Ferner kann, wie in Fig. 4 angedeutet ist, ein Volumenstromsensor 17 vorgesehen sein, der den Volumenstrom des Gases in der Gasleitung zwischen Tankmodul 11 und Zugfahrzeug 20 überwacht. Der Sensor übermittelt Daten an das Gasventilsteuermodul 19. Die im Gasventilsteuermodul 19 gesammelten Sensordaten können an die Motorsteuerung 21 übergeben und beispielsweise zur Statusanzeige im Fahrerhaus des Zugfahrzeugs 20 genutzt werden. Auf diese Weise kann die Gasanlage im Nutzfahrzeuganhänger 10 durch den Fahrer überwacht werden.

Im Allgemeinen erfolgt also die elektrische Stromversorgung für die Gasventile 13 über den Stromversorgungsausgang 35 des Bremssteuermoduls 18. Der Stromversorgungsausgang 35 stellt vorzugsweise einen 12 V Gleichstrom, vorzugsweise als Dauerpulsausgang bereit.

Das Gasventilsteuermodul 19 ist vorzugsweise am Tankmodul 11 angebracht. Das Gasventilsteuermodul 19 ist also vorzugsweise Teil des Tankmoduls 11. Damit sind nahezu alle Komponenten der Gasanlage des Nutzfahrzeuganhängers 10 im Tankmodul 11 vereint, so dass eine einfache Nachrüstung, Erstmontage und Wartung des Nutzfahrzeuganhängers 10 sichergestellt ist. Insbesondere wenn das Tankmodul 11 mit dem Fahrzeugrahmen des Nutzfahrzeuganhängers 10 mechanisch verbunden ist, sind lediglich die elektrischen Verbindungen zum Bremssteuermodul 18 und die Gasverbindung zur Gasleitung herzustellen. Gegebenenfalls ist, zumindest bei der Erstmontage, auch die Gasleitung am Nutzfahrzeuganhänger anzubringen, um das Tankmodul 11 mit dem Anschlusskasten 23 zu verbinden.

Im Hinblick auf die Betriebssicherheit der Gasanlage kann vorgesehen sein, dass jedes Gasventil 13 durch eine separate elektrische Sicherung abgesichert ist. Konkret kann in jeder der Schaltstromleitungen 30 eine elektrische Sicherung vorgesehen sein. Die Schaltstromleitungen 30 können auch über den Anschlusskasten 23 geführt sein, so dass die elektrischen Sicherungen, wobei jede einzelne Sicherung einem Gasventil 13 zugeordnet ist, sich im Anschlusskasten 23 befinden. Auf diese Weise sind die Sicherungen leicht zugänglich und können nach einem Auslösen einfach ausgetauscht bzw. in die Sicherungsstellung überführt werden.

Die Verschaltung der Gasventile 10 am Nutzfahrzeuganhänger 10 beruht bei allen Ausführungsbeispielen auf dem allgemeinen Gedanken, einen bereits vorhandenen elektrischen Stromversorgungsanschluss am Bremssteuermodul 18 als Stromquelle bzw. als Spannungsquelle für die Stromversorgung der Gasventile 13 zu nutzen. Das Bremssteuermodul 18 umfasst üblicherweise eine Schalterkennung, so dass der Schaltzustand der Gasventile 13 erfasst werden kann. Ferner ist das Bremssteuermodul 18 in der Praxis mit einer CAN-Bus-Schnittstelle ausgestattet, so dass die Daten über den Schaltzustand der Gasventile 13 an das Zugfahrzeug 20 übermittelt werden können. Bei zusätzlicher Verwendung eines Gasventilsteuermoduls 19 können außerdem Daten von Sensoren der Gasanlage abgegriffen und an das Zugfahrzeug 20 übermittelt werden. Wegen der bidirektionalen Kommunikation, die durch den CAN-Bus bereitgestellt wird, ist es auch möglich die Gasventile 13 in Abhängigkeit eines Betriebszustands des Antriebsmotors des Zugfahrzeugs 20 zu betätigen. So können die Gasventile 13 beispielsweise beim Schubbetrieb des Antriebsmotors geschlossen und/oder bei einer vorgegebenen Motortemperatur geöffnet werden. Die bidirektionale Kommunikation über die CAN-Bus-Schnittstelle bietet auch die Möglichkeit, den Schaltzustand der Gasventile 13 und/oder die Sensordaten der Gasanlage, beispielsweise auf einer Bildschirmanzeige am Zugfahrzeug 20 darzustellen, so dass dem Fahrer des Nutzfahrzeuggespanns Informationen über den Zustand der Gasanlage im Nutzfahrzeuganhänger 10 zur Verfügung stehen.

Im Allgemeinen kann eine Gasanlage am Nutzfahrzeuganhänger 10 nicht nur zur Versorgung des Antriebsmotors der Zugmaschine 20 genutzt werden, sondern auch eine Versorgung von gasbetriebenen Kühlaggregaten am Nutzfahrzeuganhänger 10 selbst ermöglichen.

### Bezugszeichenliste

- 10: Nutzfahrzeuganhänger
- 11: Tankmodul
- 12: Gastank
- 13: Gasventil
- 14: Quebalken
- 15: Befestigungsflansch
- 16: Drucksensor
- 17: Volumenstromsensor
- 18: Bremssteuermodul
- 19: Gasventilsteuermodul
- 20: Zugfahrzeug
- 21: Motorsteuerung
- 22: Schaltrelais
- 23: Anschlusskasten
- 24: Stromversorgungseingang
- 25: Datenschnittstelle
- 26: Sensoreingang
- 27: Sensorleitung
- 30: Schaltstromleitung
- 31: Stromversorgungsleitung
- 32: Stromverbindungsleitung
- 33: Steuersignalleitung
- 34: Signalverbindungsleitung
- 35: Stromversorungsausgang
- 36: Betriebsstromeingang
- 37: Betriebsstromausgang
- 38: Schaltstromausgang
- 39: Steuersignaleingang

## Patentansprüche

1. Nutzfahrzeuganhänger (20), insbesondere Sattelauflieger, mit wenigstens einem Gastank (12), der durch eine Gasleitung mit einem Antriebsmotor eines Zugfahrzeugs (20) fluidverbindbar ist, wobei sich die Gasleitung zumindest abschnittsweise entlang des Nutzfahrzeuganhängers (10) erstreckt und wobei die Gasleitung mit einem elektrisch betätigbaren Gasventil (13) des Gastanks (12) verbunden ist,
**dadurch gekennzeichnet, dass**
der Nutzfahrzeuganhänger eine Bremsanlage aufweist und das Gasventil (13) mit einem Stromversorgungsausgang (35) eines Bremssteuermoduls (18) der Bremsanlage elektrisch gekoppelt ist.

2. Nutzfahrzeuganhänger (10) nach Anspruch 1,
**dadurch gekennzeichnet, dass**
das Bremssteuermodul (18) an einem Fahrzeugrahmen des Nutzfahrzeuganhängers (10) angeordnet ist.

3. Nutzfahrzeuganhänger (10) nach Anspruch 1 oder 2,
**dadurch gekennzeichnet, dass**
ein Tankmodul (11) mit mehreren Gastanks (12) vorgesehen ist, das an dem Fahrzeugrahmen des Nutzfahrzeuganhängers (10) befestigt ist, wobei jeder Gastank (12) ein Gasventil (13) aufweist.

4. Nutzfahrzeuganhänger (10) nach einem der vorhergehenden Ansprüche,
**dadurch gekennzeichnet, dass**
zwischen dem Stromversorgungsausgang (35) und dem Gasventil (13) wenigstens ein Schaltrelais (22) und/oder ein Gasventilsteuermodul (19) angeordnet ist.

5. Nutzfahrzeuganhänger (10) nach einem der vorhergehenden Ansprüche,
**dadurch gekennzeichnet, dass**
das Gasventilsteuermodul (19) am Tankmodul (11) angeordnet ist.

6. Nutzfahrzeuganhänger (10) nach einem der vorhergehenden Ansprüche,
**dadurch gekennzeichnet, dass**
mehrere Schaltrelais (22) mit demselben Stromversorgungsausgang (35) des Bremssteuermoduls (18) in Reihenschaltung verbunden sind.

7. Nutzfahrzeuganhänger (10) nach einem der vorhergehenden Ansprüche,
**dadurch gekennzeichnet, dass**
das Gasventilsteuermodul (19) einen Stromversorgungseingang (24), der mit dem Stromversorgungsausgang (35) des Bremssteuermoduls (18) elektrisch verbunden ist, und einen Schaltstromausgang (38) zur Verbindung mit dem Gasventil (13) aufweist derart, dass das Öffnen und Schließen des Gasventils (13) durch das Gasventilsteuermodul (19) steuerbar ist.

8. Nutzfahrzeuganhänger (10) nach einem der vorhergehenden Ansprüche,
**dadurch gekennzeichnet, dass**
das Gasventilsteuermodul (19) einen Sensoreingang (26) aufweist, der mit wenigstens einem Sensor, insbesondere einem Drucksensor (16) und/oder einem Volumenstromsensor (17), signalverbunden oder signalverbindbar ist, wobei der Sensor am Gastank (12) oder in der Gasleitung angeordnet ist.

9. Nutzfahrzeuganhänger (10) nach einem der vorhergehenden Ansprüche,
**dadurch gekennzeichnet, dass**
das Bremssteuermodul (18) und/oder das Schaltrelais (22) und/oder das Gasventilsteuermodul (19) einen Steuersignaleingang (39), insbesondere eine CAN-Bus-Schnittstelle, aufweist, die mit einer Motorsteuerung (21) des Zugfahrzeugs (20) signalverbunden oder signalverbindbar ist derart, dass das Öffnen und Schließen des Gasventils (13) in Abhängigkeit eines Betriebszustands des Antriebsmotors des Zugfahrzeugs (20) steuerbar ist.

10. Nutzfahrzeuganhänger (10) nach einem der vorhergehenden Ansprüche,
**dadurch gekennzeichnet, dass**
der Stromversorgungsausgang (35) als Dauerplusausgang mit einer elektrischen Spannung von 12 Volt ausgebildet ist.

11. Nutzfahrzeuganhänger (10), insbesondere Sattelauflieger, mit wenigstens zwei Gastanks (12), die durch eine Gasleitung mit einem Antriebsmotor eines Zugfahrzeugs (20) fluidverbindbar sind und jeweils ein elektrisch betätigbares Gasventil (13) aufweisen, wobei sich die Gasleitung entlang des Nutzfahrzeuganhängers (10) erstreckt und mit jedem Gasventil (13) verbunden ist, und wobei wenigstens zwei elektrische Sicherungen vorgesehen sind, **dadurch gekennzeichnet, dass** jedes Gasventil (10) über jeweils eine eigene elektrische Sicherung abgesichert ist.

12. Nutzfahrzeuganhänger (10) nach Anspruch 11,
**dadurch gekennzeichnet, dass**
die Sicherungen der Gasventile (13) in einem Anschlusskasten an einer Stirnwand des Nutzfahrzeuganhängers (10) oder an einem Tankmodul (11), das die Gastanks (12) umfasst, angeordnet sind.

13. Nutzfahrzeuganhänger (10) nach Anspruch 12,
**dadurch gekennzeichnet, dass**
der Nutzfahrzeuganhänger (10) nach einem der Ansprüche 1 bis 10 ausgebildet ist.

14. Nutzfahrzeuggespann mit einem Zugfahrzeug (20) und einem Nutzfahrzeuganhänger (10) nach einem der vorhergehenden Ansprüche.

15. Nutzfahrzeuggespann nach Anspruch 14,
**dadurch gekennzeichnet, dass**
der Gastank (12) des Nutzfahrzeuganhängers (10) mit dem Antriebsmotor des Zugfahrzeugs (20) fluidverbunden ist derart, dass im Gastank (12) gelagertes Gas, insbesondere Erdgas oder Flüssiggas, dem Zugfahrzeug (20) als Treibstoff kontinuierlich zugeführt wird.

## Claims

1. A commercial vehicle trailer (20), in particular semitrailer, having at least one gas tank (12) which can be fluid-connected by a gas line to a drive engine of a tractor unit (20), the gas line extending along at least some sections of the commercial vehicle trailer (10), and the gas line being connected to an electrically actuated gas valve (13) of the gas tank (12),
**characterised in that**
the commercial vehicle trailer has a brake system, and the gas valve (13) is electrically coupled to a power supply output (35) of a brake control module (18) of the brake system.

2. The commercial vehicle trailer (10) according to Claim 1,
**characterised in that**
the brake control module (18) is arranged on a vehicle frame of the commercial vehicle trailer (10).

3. The commercial vehicle trailer (10) according to Claim 1 or 2,
**characterised in that**
a tank module (11) having multiple gas tanks (12) is provided and is fastened to the vehicle frame of the commercial vehicle trailer (10), wherein each gas tank (12) has a gas valve (13).

4. The commercial vehicle trailer (10) according to any one of the preceding claims,
**characterised in that**
at least one switching relay (22) and/or a gas valve control module (19) is arranged between the power supply output (35) and the gas valve (13).

5. The commercial vehicle trailer (10) according to any one of the preceding claims,
**characterised in that**
the gas valve control module (19) is arranged on the tank module (11).

6. The commercial vehicle trailer (10) according to any one of the preceding claims,
**characterised in that**
multiple switching relays (22) are series-connected to the same power supply output (35) of the brake control module (18).

7. The commercial vehicle trailer (10) according to any one of the preceding claims,
**characterised in that**
the gas valve control module (19) has a power supply input (24), which is electrically connected to the power supply output (35) of the brake control module (18), and a switching current output (38) for connection to the gas valve (13) such that the opening and closing of the gas valve (13) can be controlled by the gas valve control module (19).

8. The commercial vehicle trailer (10) according to any one of the preceding claims,
**characterised in that**
the gas valve control module (19) has a sensor input (26) which is signal-connected or can be signal-connected to at least one sensor, in particular a pressure sensor (16) and/or a volumetric flow rate sensor (17), wherein the sensor is arranged on the gas tank (12) or in the gas line.

9. The commercial vehicle trailer (10) according to any one of the preceding claims,
**characterised in that**
the brake control module (18) and/or the switching relay (22) and/or the gas valve control module (19) has a control signal input (39), in particular a CAN bus interface, which is signal-connected or can be signal-connected to an engine control unit (21) of the tractor unit (20) such that the opening and closing of the gas valve (13) can be controlled depending on an operating state of the drive engine of the tractor unit (20).

10. The commercial vehicle trailer (10) according to any one of the preceding claims,
**characterised in that**
the power supply output (35) is in the form of a steady plus output with a voltage of 12 volts.

11. A commercial vehicle trailer (10), in particular semitrailer, having at least two gas tanks (12) which can be fluid-connected by a gas line to a drive engine of a tractor unit (20) and each have an electrically actuated gas valve (13), the gas line extending along the commercial vehicle trailer (10) and being connected to each gas valve (13), and at least two electrical fuses being provided,
**characterised in that**
each gas valve (10) is protected by its own electrical fuse.

12. The commercial vehicle trailer (10) according to Claim 11,
**characterised in that**
the fuses of the gas valves (13) are arranged in a terminal box on an end wall of the commercial vehicle trailer (10) or on a tank module (11) which comprises the gas tanks (12).

13. The commercial vehicle trailer (10) according to Claim 12,
**characterised in that**
the commercial vehicle trailer (10) is designed according to any one of Claims 1 to 10.

14. A commercial vehicle trailer assembly having a tractor unit (20) and a commercial vehicle trailer (10) according to any one of the preceding claims.

15. The commercial vehicle trailer assembly according to Claim 14,
**characterised in that**
the gas tank (12) of the commercial vehicle trailer (10) is fluid-connected to the drive engine of the tractor unit (20) such that gas, in particular natural gas or liquid gas, stored in the gas tank (12) is supplied continuously to the tractor unit (20) as fuel.

## Revendications

1. Remorque de véhicule utilitaire (20), notamment semi-remorque, pourvue d'au moins un réservoir à gaz (12), qui est susceptible d'être amené en liaison fluidique par un conduit de gaz avec un moteur d'entraînement d'un véhicule tracteur (20), le conduit de gaz s'étendant au moins par tronçons le long de la remorque de véhicule utilitaire (10) et le conduit de gaz étant relié avec une soupape à gaz (13) à actionnement électrique du réservoir à gaz (12), **caractérisée en ce que** la remorque de véhicule utilitaire comporte un système de freinage et la soupape à gaz (13) est électriquement couplée sur une sortie d'alimentation électrique (35) d'un module de commande de freinage (18) du système de freinage.

2. Remorque de véhicule utilitaire (10) selon la revendication 1, **caractérisée en ce que** le module de commande de freinage (18) est placé sur un châssis de véhicule de la remorque de véhicule utilitaire (10).

3. Remorque de véhicule utilitaire (10) selon la revendication 1 ou 2, **caractérisée en ce qu'**il est prévu un module de réservoirs (11) pourvu de plusieurs réservoirs à gaz (12), qui est fixé sur le châssis de véhicule de la remorque de véhicule utilitaire (10), chaque réservoir à gaz (12) comportant une soupape à gaz (13).

4. Remorque de véhicule utilitaire (10) selon l'une quelconque des revendications précédentes,
**caractérisée en ce**
**qu'**entre la sortie d'alimentation électrique (35) et la soupape à gaz (13) est placé au moins un relais de commutation (22) et/ou un module de commande de soupape à gaz (19).

5. Remorque de véhicule utilitaire (10) selon l'une quelconque des revendications précédentes,
**caractérisée en ce que**
le module de commande de soupape à gaz (19) est placé sur le module de réservoir (11).

6. Remorque de véhicule utilitaire (10) selon l'une quelconque des revendications précédentes,
**caractérisée en ce que**
plusieurs relais de commutation (22) sont reliés par montage en série avec la même sortie d'alimentation électrique (35) du module de commande de freinage (18) .

7. Remorque de véhicule utilitaire (10) selon l'une quelconque des revendications précédentes,
**caractérisée en ce que**
le module de commande de soupape à gaz (19) comporte une entrée d'alimentation électrique (24), qui est électriquement reliée avec la sortie d'alimentation électrique (35) du module de commande de freinage (18), et qui comporte une sortie de courant de commutation (38) destinée à être reliée avec la soupape à gaz (13), de telle sorte que l'ouverture et la fermeture de la soupape à gaz (13) soient susceptibles d'être commandées par le module de commande de soupape à gaz (19).

8. Remorque de véhicule utilitaire (10) selon l'une quelconque des revendications précédentes,
**caractérisée en ce que** le module de commande de soupape à gaz (19) comporte une entrée de capteur (26) qui est reliée ou susceptible d'être reliée par signal avec au moins un capteur, notamment un capteur de pression (16) et/ou un capteur de débit volumique (17), le capteur étant placé sur le réservoir à gaz (12) ou dans le conduit de gaz.

9. Remorque de véhicule utilitaire (10) selon l'une quelconque des revendications précédentes,
**caractérisée en ce que**
le module de commande de freinage (18) et/ou le relais de commutation (22) et/ou le module de commande de soupape à gaz (19) comporte une entrée de signal de commande (39), notamment une interface de bus CAN qui est reliée ou susceptible d'être reliée par signal avec un système de commande du moteur (21) du véhicule tracteur (20), de telle sorte que l'ouverture et la fermeture de la soupape à gaz (13) soient susceptibles d'être commandées en fonction d'un état de service du moteur d'entraînement du véhicule tracteur (20).

10. Remorque de véhicule utilitaire (10) selon l'une quelconque des revendications précédentes,
**caractérisée en ce que**
la sortie d'alimentation électrique (35) est conçue sous la forme d'une sortie de plus permanent d'une tension électrique de 12 volts.

11. Remorque de véhicule utilitaire (10), notamment semi-remorque, pourvue d'au moins deux réservoirs à gaz (12), qui sont susceptibles d'être amenés en liaison fluidique par un conduit de gaz avec un moteur d'entraînement d'un véhicule tracteur (20), et qui comportent chacun une soupape à gaz (13) à actionnement électrique, le conduit de gaz s'étendant le long de la remorque de véhicule utilitaire (10) et étant relié avec chaque soupape à gaz (13), et au moins deux fusibles électriques étant prévus, **caractérisée en ce que** chaque soupape à gaz (10) est sécurisée par l'intermédiaire de respectivement un propre fusible électrique.

12. Remorque de véhicule utilitaire (10) selon la revendication 11,
**caractérisée en ce que** les fusibles des soupapes à gaz (13) sont placés dans une boîte de jonction sur une paroi frontale de la remorque de véhicule utilitaire (10) ou sur un module de réservoir (11), qui comprend les réservoirs à gaz (12).

13. Remorque de véhicule utilitaire (10) selon la revendication 12,
**caractérisée en ce que** la remorque de véhicule utilitaire (10) est conçue selon l'une quelconque des revendications 1 à 10.

14. Attelage de véhicule utilitaire pourvu d'un véhicule tracteur (20) et d'une remorque de véhicule utilitaire (10) selon l'une quelconque des revendications précédentes.

15. Attelage de véhicule utilitaire selon la revendication 14,
**caractérisé en ce que** le réservoir à gaz (12) de la remorque de véhicule utilitaire (10) est relié par fluide avec le moteur d'entraînement du véhicule tracteur (20) de telle sorte que du gaz stocké dans le réservoir à gaz (12) notamment du gaz naturel ou du gaz liquide soit alimenté en continu en tant que carburant vers le véhicule tracteur (20).
